# EUROPEAN PATENT APPLICATION

(11) **EP 4 560 754 A1**
(43) Date of publication of application: **28.05.2025**
(21) Application number: 24200950.4
(22) Date of filing: 18.09.2024
(51) Int. Cl.: H01M 10/04, H01M 10/0587, H01M 50/107, H01M 50/533, H01M 50/538

(54) **WINDING ROLL STRUCTURE FOR IMPLEMENTING EDGE BENDING OF ELECTRODE ASSEMBLY AND WINDING METHOD USING THE SAME**

(30) Priority: 23.11.2023 KR 20230163983
(71) Applicant: SAMSUNG SDI CO., LTD., Yongin-si, Gyeonggi-do 17084 (KR)
(72) Inventor: Park, Jung Hyun, 17084 Yongin-si, Gyeonggi-do (KR); Kim, Jung Hyun, 17084 Yongin-si, Gyeonggi-do (KR); Kim, Joung Ku, 17084 Yongin-si, Gyeonggi-do (KR); Jung, Hyun Ki, 17084 Yongin-si, Gyeonggi-do (KR); Kim, Myung Seob, 17084 Yongin-si, Gyeonggi-do (KR); Shin, Joo Youn, 17084 Yongin-si, Gyeonggi-do (KR); Park, Byung Kyu, 17084 Yongin-si, Gyeonggi-do (KR); Lee, Gye Won, 17084 Yongin-si, Gyeonggi-do (KR)
(74) Representative: Gulde & Partner

(57) **Abstract**

A winding roll structure configured to implement edge bending of an electrode assembly according to one embodiment of the present disclosure, and wind the electrode assembly including a first electrode plate and a second electrode plate, and a separator disposed therebetween, includes an edge bending unit configured to bend both side edges in a longitudinal direction of the electrode assembly in one direction, and a winding unit configured to wind the electrode assembly that has passed through the edge bending unit, wherein the edge bending unit includes a pinch roller and an anvil roller each extending in a longitudinal direction and arranged in parallel, the pinch roller includes a roller main body, and a pair of enlarged diameter portions provided at both ends of the roller main body and having a larger diameter than the roller main body, the anvil roller is disposed adjacent to the pinch roller between the pair of enlarged diameter portions, and both side edges in the longitudinal direction of the electrode assembly are bent in one direction while the electrode assembly passes between the pinch roller and the anvil roller.

## Description

### BACKGROUND

### 1. Field

The present disclosure relates to a winding roll structure that implements edge bending of an electrode assembly, and a winding method using the same. More specifically, the present disclosure relates to a winding roll structure that operates so that a first electrode uncoated portion and a second electrode uncoated portion of an electrode assembly are bent and pre-compacted in one direction, and then wound during a winding process for accommodating the electrode assembly in a cylindrical case, and a winding method using the same.

### 2. Description of the Related Art

Generally, a cylindrical secondary battery may include a case, an electrode assembly accommodated in the case, a terminal coupled to a terminal hole provided at one end of the case, and a cap plate that seals an opening at the other end of the case.

Specifically, the electrode assembly is wound in a circular shape while passing through a winding roll structure so as to form a jelly roll (J/R) to be accommodated in a cylindrical case, and a base material protruding from an upper portion and a lower portion of the jelly roll is electrically connected to a cap assembly by welding the base material to the cap assembly. Generally, the electrode assembly includes a first electrode plate (a positive electrode plate), a second electrode plate (a negative electrode plate), and a separator, wherein a positive electrode active material is formed on both side surfaces of the first electrode plate, which is the positive electrode plate, a negative electrode active material is formed on both side surfaces of the second electrode plate, which is the negative electrode plate, and uncoated portions (a first electrode uncoated portion and a second electrode uncoated portion) where active materials are not applied are respectively formed in a portion of the first electrode plate and a portion of the second electrode plate. The above-described base material refers to the uncoated portion of the electrode plate where the active material is not applied.

In the case of the cylindrical secondary battery, an application area of the active material decreases as the proportion of the base material in the electrode plate increases, which results in a capacity loss of the battery. Attempts have been made to reduce an area of the base material to realize high capacity, but as an interval between the base materials increases, a problem arises in which the heat capacity of a weld zone decreases. Accordingly, research and development on a method capable of increasing battery capacity by efficiently reducing a protruding length of the base material is needed.

The above-described information disclosed in the background technology of this invention is only for improving understanding of the background of the present disclosure, and accordingly, can include information which does not constitute the related art.

### SUMMARY

The present disclosure is directed to providing a winding roll structure and a winding method of providing a secondary battery capable of reducing the protruding length of a base material required for welding to realize an increase in battery capacity.

A winding roll structure is configured to implement edge bending of an electrode assembly according to one embodiment of the present disclosure, and wind the electrode assembly including a first electrode plate and a second electrode plate, and a separator disposed therebetween. The winding roll structure includes an edge bending unit configured to bend both side edges in a longitudinal direction of the electrode assembly at opposite side of the electrode assembly. The edge bending unit includes a pinch roller and an anvil roller each extending in a longitudinal direction of the edge bending unit and arranged parallel to each other. The pinch roller includes a roller main body and enlarged diameter portions each having a larger diameter than a diameter of the roller main body. The anvil roller is disposed adjacent to the pinch roller between the enlarged diameter portions. The winding roll structure also includes a winding unit configured to wind the electrode assembly that has passed through the edge bending unit. The winding roll structure is configured such that both side edges in the longitudinal direction of the electrode assembly are bent in one direction while the electrode assembly passes between the pinch roller and the anvil roller.

In addition, the enlarged diameter portions of the pinch roller each include an inclined portion inclined at a predetermined angle relative to the roller main body and connected to the roller main body, and the winding roll structure is configured such that the edges of the electrode assembly may be pressed and bent in the one direction by the inclined portions when the electrode assembly enters the edge bending unit.

Further, the edge bending unit is configured to bend the side edges of the electrode assembly in the same direction.

A winding method of implementing edge bending of an electrode assembly is also provided according to one embodiment of the present disclosure, with the electrode assembly including a first electrode plate and a second electrode plate, and a separator disposed between the first electrode plate and the second electrode plate. The winding method includes preparing electrode assembly by stacking the first electrode plate and the second electrode plate on each other with the separator therebetween so that a first electrode uncoated portion of the first electrode plate is exposed at a first end in a longitudinal direction and a second electrode uncoated portion of the second electrode plate is exposed at a second end in the longitudinal direction; passing the electrode assembly through the edge bending unit of the winding roll structure described above, with side edges in a longitudinal direction of the electrode assembly being bent to form bent edge portions; and passing the electrode assembly with the bent edge portions through the winding unit of the winding roll structure to wind the electrode assembly.

Further, the side edges are bent in a direction toward a winding axis of the electrode assembly.

In addition, in the forming of the bent side edge portions, the side edges are pressed by the enlarged diameter portion of the pinch roller and bent while the electrode assembly passes through the gap provided between the pinch roller and the anvil roller.

In addition, the both side edges may be the first electrode uncoated portion and the second electrode uncoated portion, and the first electrode uncoated portion and the second electrode uncoated portion may be pressed by inclined portions provided in the enlarged diameter portions of the pinch roller and may be bent at a predetermined angle.

Still further, the side edges of the electrode assembly are bent in the same direction, wherein, the electrode assembly is prepared by staking the first electrode plate and the second electrode plate on each other with the separator therebetween so that a first electrode uncoated portion of the first electrode plate is exposed at a first end in a longitudinal direction and a second electrode uncoated portion of the second electrode plate is exposed at a second end in the longitudinal direction, the first electrode uncoated portion and the second electrode uncoated portion are bent in one direction while the electrode assembly passes through a gap provided between the pinch roller and the anvil roller

### BRIEF DESCRIPTION OF DRAWINGS

FIG. 1 is a perspective view illustrating a cylindrical secondary battery according to one embodiment of the present disclosure.
FIG. 2 is a cross-sectional view of the cylindrical secondary battery according to FIG. 1.
FIG. 3 includes a plan view and a cross-sectional view of an electrode assembly forming a jelly roll in FIG. 2.
FIG. 4 is a cross-sectional view illustrating an electrode assembly in which edge bending is implemented by applying pre-compaction to the electrode assembly in FIG. 3.
FIG. 5 is a conceptual diagram schematically illustrating a winding roll structure which implements the edge bending of the electrode assembly according to one embodiment of the present disclosure.
FIG. 6 is a view illustrating an edge bending unit constituting the winding roll structure in FIG. 5.
FIG. 7 is a cross-sectional view of a state in which the electrode assembly in which the edge bending is implemented is wound.
FIGS. 8A and 8B are conceptual diagrams exemplarily illustrating the edge bending unit of the winding roll structure according to one embodiment of the present disclosure.

### DETAILED DESCRIPTION

Hereinafter, embodiments of the present disclosure will be described in detail with reference to the accompanying drawings. The embodiments of the present disclosure are provided to more completely describe the present disclosure to those skilled in the art, the following embodiments may be modified into various other forms, and the scope of the present disclosure not limited to the following embodiments. Rather, these embodiments are provided to make the present disclosure more faithful and complete and to fully convey the present disclosure to those skilled in the art.

Further, in the following drawings, a thickness and a size of each layer are exaggerated for convenience and clarity of description, and the same reference numerals indicate the same elements in the drawings. As used in the present specification, the term "and/or" includes any one of and all combinations of one or more of the listed items. Further, the meaning of "being connected" in the present specification refers to not only a case in which member A and member B are directly connected, but also a case in which member C is interposed between member A and member B to indirectly connect member A and member B. The terms used in the present specification are used to describe specific embodiments and are not intended to limit the present disclosure. As used in the present specification, a singular form may include a plural form unless the context clearly indicates otherwise. Further, when used in the present specification, "comprise" and/or "comprising" specify(ies) the presence of mentioned features, numbers, steps, operations, members, elements and/or groups thereof, and do(es) not exclude the presence or addition of one or more other features, numbers, steps, operations, members, elements and/or groups.

Although the terms first, second, and the like are used in the present specification to describe various members, components, regions, layers and/or parts, it is obvious that these members, components, regions, layers and/or parts should not be limited by these terms. These terms are used only to distinguish one member, component, region, layer, or part from another member, component, region, layer, or part. Accordingly, a first member, component, region, layer, or part to be described later may refer to a second member, component, region, layer, or part without departing from the teachings of the present disclosure.

Spatially-related terms such as "beneath," "below," "lower," "above," and "upper" are used for easy understanding of one element or feature and another element or feature shown in the drawings. These spatially-related terms are provided for easy understanding of the present disclosure according to various process states or usage states of the present disclosure, and are not intended to limit the present disclosure. For example, when the elements or features in the drawings are reversed, the element or feature described as "lower" or "below" "becomes "upper" or "above." Accordingly, "below" is a concept encompassing "above" or "below."

### Cylindrical secondary battery 100

First, a cylindrical secondary battery 100 manufactured through the present disclosure will be described in detail with reference to the drawings.

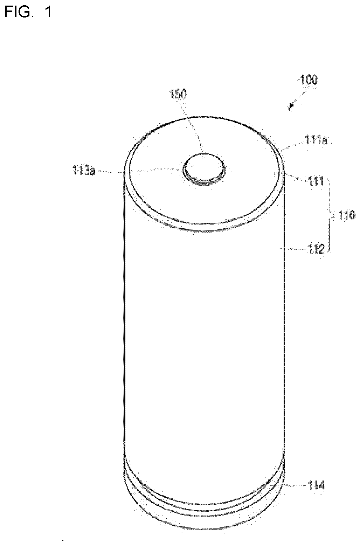

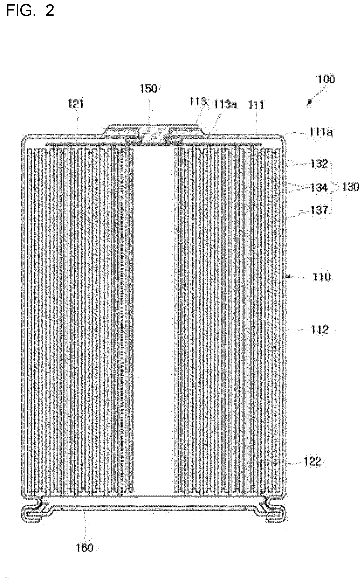

FIG1 is a perspective view illustrating the cylindrical secondary battery according to one embodiment of the present disclosure, and FIG. 2 is a cross-sectional view of the cylindrical secondary battery according to FIG. 1.

As shown in FIGS. 1 and 2, the cylindrical secondary battery 100 according to the present disclosure may include a case 110, an electrode assembly 130 accommodated in the case 110, a terminal 150 coupled to a terminal hole provided at one end of the case 110, and a cap plate 160 which seals an opening at the other end of the case 110.

The case 110 may include a circular upper surface portion 111 and a side surface portion 112 extending a certain length downward from an edge of the upper surface portion 111, and may further include a bent portion 111a bent in a round shape between the upper surface portion 111 and the side surface portion 112. The upper surface portion 111 may have a flat circular plate shape, and a center portion 113 may be located at a center of the upper surface portion 111. Since the center portion 113 is located farther from the case 110 than the upper surface portion 111, a step may be provided between the center portion 113 and the upper surface portion 111. The center portion 113 may have a terminal hole 113a passing therethrough.

The terminal 150 may be inserted into the terminal hole 113a of the case 110 to be electrically connected to a first current collector plate 121, which will be described below. The terminal 150 may be electrically connected to a first electrode plate 132 of the electrode assembly through the first current collector plate 121. That is, the terminal 150 may be a positive terminal. The terminal 150 and the case 110 may have different polarities.

Meanwhile, a lower portion of the case 110 is open, and the electrode assembly 130 may be inserted with an electrolyte through the open lower portion of the case 110. In this case, the electrolyte and the electrode assembly 130 may be inserted into the case 110 in a state in which the open lower portion faces upward. After the electrolyte and the electrode assembly 130 are inserted, the cap plate 160 may be coupled to the open lower end portion to seal the interior of the case 110. Here, the electrolyte serves to allow lithium ions to move between the first electrode plate 132 and a second electrode plate 134 constituting the electrode assembly 130. After the electrode assembly 130 is inserted into the case 110 through the open lower end portion, a bending portion may be formed to prevent separation of the electrode assembly 130 from the case 110.

The cap plate 160 may be a circular metal plate and coupled to the lower end portion of the case 110. A lower surface of the cap plate 160 may be exposed at the outside. The cap plate 160 may be coupled to the lower end portion of the case 110 with a gasket interposed therebetween to prevent electrical connection with the case 110. The cap plate 160 is not electrically connected to a positive electrode or negative electrode of the electrode assembly 130, and thus may not have a separate electrical polarity.

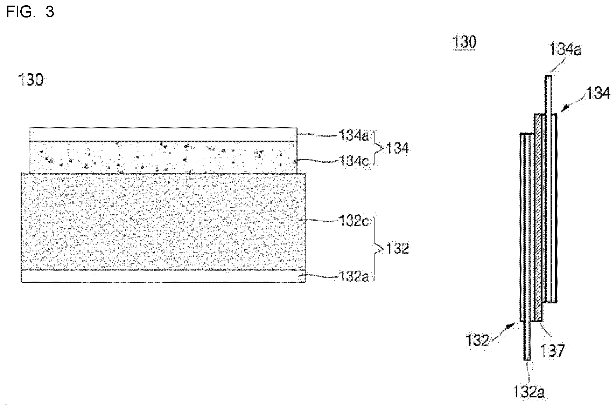

Next, FIG. 3 shows a plan view and a cross-sectional view of the electrode assembly forming a jelly roll in FIG. 2 before winding. As shown in FIG. 3, the electrode assembly 130 includes the first electrode plate 132, the second electrode plate 134, and a separator 137.

The first electrode plate 132 may be a positive electrode plate in which a positive electrode active material layer 132c (for example, a transition metal oxide (LiCoO₂, LiNiO₂, LiMn₂O₄, or the like)) is formed on both surfaces of the plate. A first electrode uncoated portion 132a where the positive electrode active material layer 132c is not applied may be formed in a portion of the first electrode plate 132. The second electrode plate 134 may be a negative electrode plate in which a negative electrode active material layer 134c (for example, graphite, carbon, or the like) is formed on both surfaces of the plate. A second electrode uncoated portion 134a where the negative electrode active material layer 134c is not applied may be formed in a portion of the second electrode plate 134. The separator 137 may be interposed between the first electrode plate 132 and the second electrode plate 134 to prevent a short circuit and allow only lithium ions to move. The first electrode plate 132 may be a copper (Cu) or nickel (Ni) foil, the second electrode plate 134 may be an aluminum (Al) foil, and the separator 137 may be polyethylene (PE) or polypropylene (PP), but the present disclosure is not limited to these materials. In this case, the first electrode plate 132 and the second electrode plate 134 may be disposed so that the first electrode uncoated portion 132a and the second electrode uncoated portion 134a where the active materials are not applied for winding are in opposite directions. For example, the first electrode plate 132, which is the positive electrode plate, may be disposed so that the first electrode uncoated portion 132a faces downward based on FIG. 3. The second electrode plate 134, which is the negative electrode plate, may be disposed so that the second electrode uncoated portion 134a faces upward based on FIG. 3.

After the first electrode plate 132, the second electrode plate 134, and the separator 137 are stacked, the electrode assembly 130 is wound in a roughly cylindrical shape from a winding front. In the electrode assembly 130, a positive electrode uncoated portion, which is not coated with a positive electrode active material, may protrude in an upward direction from the first electrode plate 132, and a negative electrode uncoated portion, which is not coated with a negative electrode active material, may protrude in a downward direction from the second electrode plate 134. Further, in the electrode assembly 130, the outermost positive electrode uncoated portion may not protrude in the upward direction, and the outermost negative electrode uncoated portion may not protrude in the downward direction. That is, the electrode assembly 130 may include concave steps at the upper and lower outermost sides compared to other regions.

The cylindrical secondary battery 100 according to the present disclosure includes the first current collector plate 121 and a second current collector plate 122. As shown in FIG. 2, the first current collector plate 121 may be a circular metal plate having a shape corresponding to an upper surface of the electrode assembly 130, and may be made of aluminum (Al). The first current collector plate 121 may be fixed and electrically connected to the first electrode plate 132 exposed at an upper portion of the electrode assembly 130 by welding in a state in which a lower surface thereof is in contact with the upper surface of the electrode assembly 130. The first current collector plate 121 may be fixed and electrically connected to the terminal 150 by welding in a state in which an upper surface thereof is in contact with a lower surface of the terminal 150. The first current collector plate 121 becomes a path for current flow between the first electrode plate 132 of the electrode assembly 130 and the terminal 150. The first current collector plate 121 may be welded to the electrode assembly 130 and accommodated in the case 110, and then welded to the terminal 150.

The second current collector plate 122 may include a circular flat portion corresponding to a lower surface of the electrode assembly 130, and an extending portion extending in a downward direction from an edge of the flat portion. An upper surface of the flat portion may be in contact with the lower surface of the electrode assembly 130. In this state, the upper surface of the flat portion may be fixed and electrically connected to the second electrode plate 134 exposed at the lower portion of the electrode assembly 130 by welding.

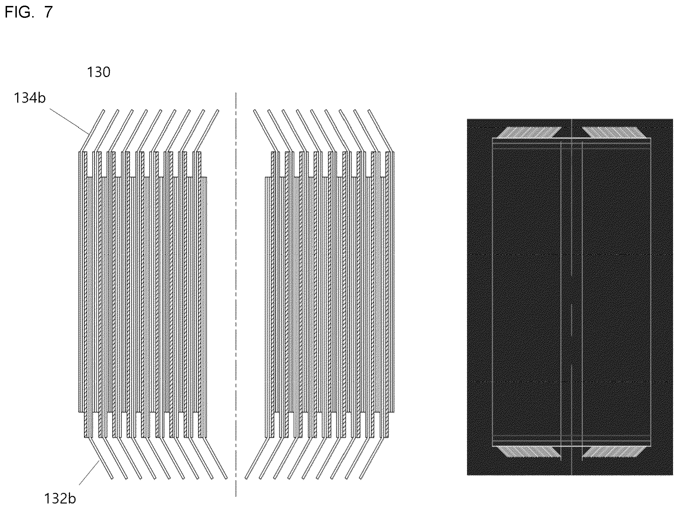

According to the present disclosure, before winding the electrode assembly 130, a process of folding both side edges in a longitudinal direction of the electrode assembly 130, that is, the first electrode uncoated portion 132a and the second electrode uncoated portion 134a in an inward direction, which is a direction toward a winding axis, (hereinafter referred to as edge bending) is performed. After bending is performed at both side edges of the electrode assembly 130, a winding process is performed, and after winding, as the electrode assembly 130 is pressed in the longitudinal direction, a jelly roll (J/R) shown in FIG. 1 is formed. Since the edge bending is performed before winding the electrode assembly 130, as show in FIG. 7 in the wound electrode assembly 130 the base materials (the first electrode uncoated portion 132a and the second electrode assembly uncoated portion 134a) protruding in the longitudinal direction are folded in a radially inward direction around the winding axis. In this state, as the electrode assembly 130 is pressed in the longitudinal direction, the protruding base materials takes a form which covers both ends of the jelly roll in the longitudinal direction. Detailed descriptions of the edge bending and the winding process will be described below.

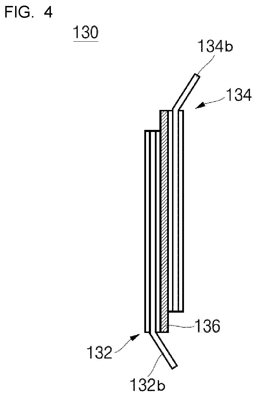

FIG. 4 is a cross-sectional view illustrating an electrode assembly in which edge bending is implemented by applying pre-compaction to the electrode assembly in FIG. 3. As shown in FIG. 4, the electrode assembly 130 provided according to one embodiment of the present disclosure may include bent edge portions 132b and 134b formed by folding or bending a portion of the first electrode uncoated portion 132a of the first electrode plate 132 and a portion of the second electrode uncoated portion 134a of the second electrode plate 134. That is, as shown in FIG. 4, in the first electrode plate 132 and the second electrode plate 134, the bent edge portions 132b and 134b may be formed by bending or folding the first electrode uncoated portion 132a and the second electrode uncoated portion 134a. These bent edge portions 132b and 134b may be formed by a process of passing between a pinch roller 1110 and an anvil roller 1130 constituting an edge bending unit 1100 of a winding roll structure 1000 in a manufacturing process, as will be described below in detail.

After the bent edge portions 132b and 134b are formed at both side edges in the longitudinal direction of the electrode assembly 130, the electrode assembly 130 is wound to form the jelly roll. Since the electrode assembly 130 is wound in a state in which the bent edge portions 132b and 134b are formed in the first and second electrode uncoated portions 132a and 134a, as shown in FIG. 7, the bent edge portions 132b and 134b are in a state of being angled in a direction approaching the winding axis. Since FIG. 7 illustrates the first electrode plate 132 and the second electrode plate 134 in an exaggerated manner, the spacing between the folded bent edge portions 132b and 134b is exaggerated. In practice, the electrode uncoated portions formed with the bent edge portions 132b and 134b may be maintained at a distance such that there is partial overlapping between neighboring electrode uncoated portions. The spacing between the uncoated portions may be changed according to an electrode plate design of the electrode assembly 130.

Thereafter, the bent edge portions 132b and 134b may be pressed by the first and second current collector plates 121 and 122, and the first current collector plate 121 and the second current collector plate 122 may be connected to these bent edge portions 132b and 134b, respectively. Accordingly, the case 110 and the cap plate 160 may be electrically connected to the electrode assembly 130.

In this way, when the bent edge portions 132b and 134b are formed in advance by folding the electrode uncoated portions before winding, the base materials may uniformly and consistently overlap when the current collector plates 121 and 122 are welded. Thus, there is an effect that the amount of overlap increases. When a pre-compaction process is not applied, there is a problem that end portions of the base materials are irregularly pressed and bent, and thus, heights of the end portions or the amount of overlap of the base material end portions become irregular. But when the pre-compaction process is applied, the base materials are bent in the same direction, the end portions of the base materials uniformly overlap. Thus, the amount of overlap of the base material end portions increases compared to a case in which the pre-compaction process is not applied. Further, as the base materials are uniformly bent, heights of the base material end portions are uniformly aligned, and thus, an amount of the base materials to be welded when the current collector plates 121 and 122 are welded increases and tensile strength is thereby improved. Accordingly, there is an effect that a resistance distribution is improved and welding quality is improved due to uniform alignment of the base materials.

Winding roll structure 1000 that implements edge bending of electrode assembly

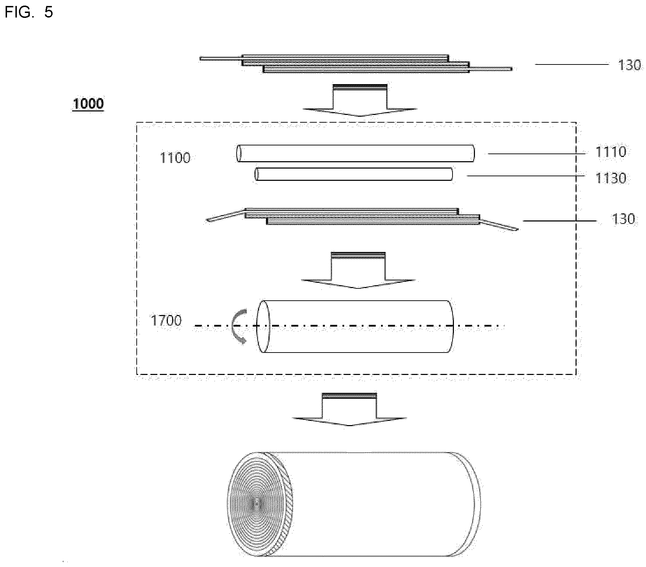

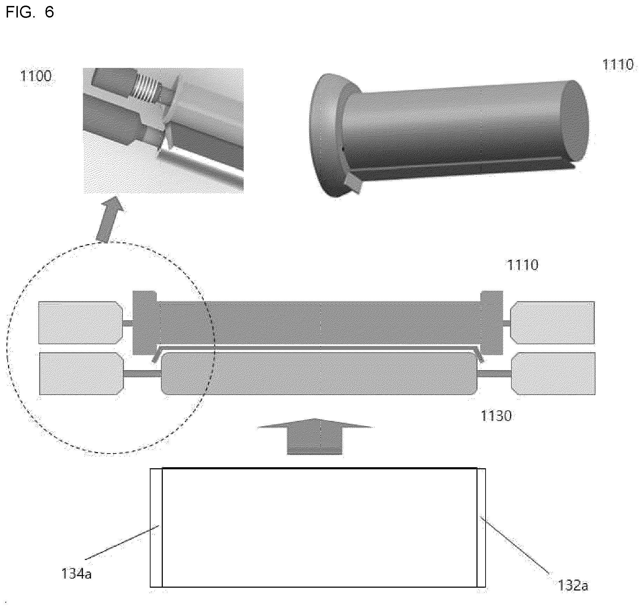

FIG. 5 is a conceptual diagram schematically illustrating the winding roll structure that implements the edge bending of the electrode assembly according to one embodiment of the present disclosure, and FIG. 6 is a view illustrating the edge bending unit constituting the winding roll structure in FIG. 5. Hereinafter, the winding roll structure 1000 that implements the edge bending of the electrode assembly according to one embodiment of the present disclosure will be described.

The winding roll structure 1000 of the present disclosure is a device for forming a jelly roll by winding the electrode assembly 130 including the first electrode plate 132 and the second electrode plate 134, with the separator 137 disposed therebetween. The electrode assembly 130 in which the first electrode plate 132, the second electrode plate 134, and the separator 137 overlap in the longitudinal direction enters the winding roll structure 1000 in a width direction thereof. After the edge bending and the winding process are sequentially performed in the winding roll structure 1000, a jelly roll is formed and discharged from the winding roll structure 1000.

The winding roll structure 1000 of the present disclosure includes the edge bending unit 1100 that bends both side edges in the longitudinal direction of the electrode assembly 130 in one direction (i.e., the same direction) and a winding unit 1700 that winds the electrode assembly 130 that has passed through the edge bending unit 1100.

The edge bending unit 1100 includes the pinch roller 1110 and the anvil roller 1130 that extend in the longitudinal direction and arranged in parallel. When the electrode assembly 130 enters the winding roll structure 1000 of the present disclosure, the electrode assembly 130 first passes between the pinch roller 1110 and the anvil roller 1130 constituting the edge bending unit 1100. In this process, in the electrode assembly 130, a portion of the first electrode uncoated portion 132a of the first electrode plate 132 and a portion of the second electrode uncoated portion 134a of the second electrode plate 134 are folded or bent to form bent edge portions 132b and 134b. Hereinafter, a process of forming the bent edge portions 132b and 134b before winding is expressed as an edge bending process or a pre-compaction process.

A structure of the edge bending unit 1100 for implementing the edge bending will be described in detail.

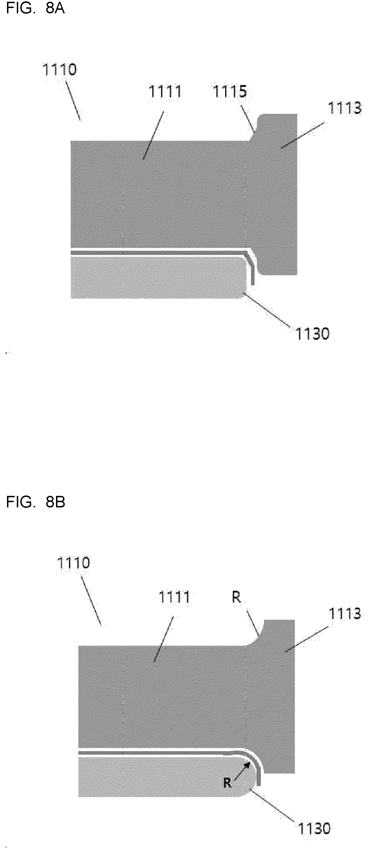

Referring to FIGS. 6 and 8A, the pinch roller 1110 includes a roller main body 1111 having a predetermined diameter and a pair of enlarged diameter portions 1113 provided at both ends of the roller main body 1111, with the enlarged diameter portions 1113 having larger diameters than the diameter of the roller main body 1111. Further, the anvil roller 1130 is disposed adjacent to the pinch roller 1110 between the pair of enlarged diameter portions 1113 of the pinch roller 1110. Rotational driving of the edge bending unit 1100 may be performed by a separate driving unit not shown in the drawings. For example, the driving unit may be configured by applying a linear motor, an actuator, or the like capable of rotating the pinch roller 1110 and the anvil roller 1130 about an axial direction. As shown in FIG. 6, a gap is provided between the pinch roller 1110 and the anvil roller 1130. The electrode assembly 130 enters the edge bending unit 1100 in the width direction thereof, and the electrode assembly 130 passes through the gap between the pinch roller 1110 and the anvil roller 1130.

In this case, a portion of the first electrode uncoated portion 132a of the first electrode plate 132 protruding upward in the longitudinal direction, and a portion of the second electrode uncoated portion 134a of the second electrode plate 134 protruding downward in the longitudinal direction protrude further outward in the longitudinal direction of the anvil roller 1130. The portion of the first electrode uncoated portion 132a and the portion of the second electrode uncoated portion 134a come into contact with the enlarged diameter portions 1113 of the pinch roller 1110 in the process of passing through the gap. In this positional relationship, the electrode assembly is pulled through the gap between the pinch roller 1110 and the anvil roller 1130 while the pinch roller 1110 and the anvil roller 1130 rotate. Since the portions of the two uncoated portions 134a and 134b protruding outward in the longitudinal direction of the anvil roller 1130 are pressed by the enlarged diameter portions 1113 of the pinch roller 1110, the portions of the two uncoated portions 134a and 134b are folded at a predetermined inclination or bent at a predetermined curvature with respect to planes of the first electrode plate 132 and the second electrode plate 134. Bending occurs in one direction (that is, the same direction that is a downward direction in FIG. 5), both side edges in the longitudinal direction of the electrode assembly 130, that is, the portion of the first electrode uncoated portion 132a and the portion of the second electrode uncoated portion 134a, are bent in one direction to form bent edge portions 132b and 134b. In this case, the predetermined inclination is an inclination angle of an inclined portion 1115 (see FIG. 8A) provided in the enlarged diameter portion 1113. Further, the predetermined curvature is a curvature of a rounded portion R (see FIG. 8B) processed in the enlarged diameter portion 1113. In addition, the one direction in which each electrode uncoated portion is folded is a direction toward the winding axis based on the winding axis when the electrode assembly 130 is wound so that the bent edge portions 132b and 134b are folded inward around the winding axis of the electrode assembly 130 as shown in FIG. 7 during winding. Accordingly, the electrode assembly 130 is discharged through the edge bending unit 1100 in a state in which both ends are folded in one direction.

FIGS. 8A and 8B are conceptual diagrams illustrating examples of the bent edge portions of the winding roll structure according to one embodiment of the present disclosure.

As shown in FIG. 8A, the inclined portion 1115 inclined at a predetermined angle may be provided in the enlarged diameter portion 1113 of the pinch roller 1110. The enlarged diameter portion 1113 is connected to the roller main body 1111 through the inclined portion 1115. According to this structure, when the electrode assembly 130 enters the edge bending unit 1100, both side edges are pressed and bent in one direction by the inclined portion 1115 while the electrode assembly 130 passes through the above-described gap.

Further, as shown in FIG. 8B, the rounded portion R may be processed in a connection portion between the enlarged diameter portion 1113 of the pinch roller 1110 and the roller main body 1111 at a predetermined curvature angle. When the electrode assembly 130 enters the edge bending unit 1100, the edges come into close contact with the rounded portion R while being pressed by the enlarged diameter portion 1113, and, thus, may be bent into curved surfaces with a predetermined curvature. In this case, a rounded portion R may be formed not only in the pinch roller 1110 but also in the anvil roller 1130 at a position facing the rounded portion R of the pinch roller 1110.

As described above, when the pre-compaction process is applied, that is, the bent edge portions 132b and 134b are formed at both side edges of the electrode assembly 130 before winding, the protruding lengths of the base materials may be reduced compared to a case in which the pre-compaction process is not applied. Since a decrease in the protruding lengths of the base materials means an increase in an application area of an active material, this has an effect of increasing battery capacity without increasing a total height of the jelly roll.

**[Table 1]**

| Classification | Positive electrode base m aterial protruding length | Negative electrode base ma terial protruding length | Total |
|---|---|---|---|
| Conventional case | 2.0 mm | 2.5 mm | 4.5 mm |
| Improved case | 0.75 mm | 0.75 mm | 1.5 mm |

That is, referring to Table 1, when pre-compaction is not applied to the electrode assembly 130, a total base material protruding amount of 4.5 mm is required to ensure stable electrical connection with the cap assembly, but when the pre-compaction is applied to the electrode assembly 130 as in the present disclosure, a total base material protruding amount of only 1.5 mm is required. Accordingly, since an inner space having a length of 3.0 mm may be secured compared to the conventional case, the battery capacity may be increased though the total height of the jelly roll remains the same. Further, when the pre-compaction process is performed before winding, the amount of overlap of the base materials increases compared to the base materials to which the pre-compaction process is not applied. That is, when the pre-compaction process is not applied, the heights of the end portions or the amount of overlap of the end portions of the base material is irregular since end portions of the base materials are irregularly pressed and bent. However, when the pre-compaction process is applied, the base materials are bent in the same direction and the end portions of the base materials thereby overlap uniformly. Thus, the amount of overlap of the end portions of the base material increases compared to a case in which the pre-compaction process is not performed. Still further, as the base materials are bent uniformly, the heights of the end portions of the base materials are uniformly aligned and an amount of base materials to be welded when the current collector plates are welded increases. Thus, tensile strength is improved. Accordingly, there is an effect in that a resistance distribution is improved and welding quality is improved due to the uniform alignment of the base materials.

### Winding method through winding roll structure that implements edge bending of electrode assembly

Hereinafter, a winding method of implementing the edge bending of the electrode assembly according to one embodiment of the present disclosure will be described. The winding method of the present disclosure is a winding method in which a winding process is performed after performing a pre-compaction process on the electrode assembly 130 including the first electrode plate 132, the second electrode plate 134, and the separator 137 disposed between the first electrode plate 132 and the second electrode plate 134. The winding method may include the sequential performance of the following operations.

First, an operation is performed of preparing electrode assemblies 130 stacked on each other with the separator 137 therebetween so that the first electrode uncoated portion 132a of the first electrode plate 132 is exposed at one end in the longitudinal direction and the second electrode uncoated portion 134a of the second electrode plate 134 is exposed at the other end in the longitudinal direction. As this electrode assembly 130 is the same as that described with reference to FIG. 3 in the detailed above description of the winding roll structure 1000, the a description of the electrode assembly 130 is not repeated here.

Next, the electrode assembly 130 is first allowed to pass through the edge bending unit 1100 of the winding roll structure 1000 according to one embodiment of the present disclosure, and then an operation of bending both side edges in the longitudinal direction of the electrode assembly 130 in one direction to form bent edge portions 132b and 134b is performed. This operation is a process of folding both side edges in the longitudinal direction of the electrode assembly 130. That is, a portion of the first electrode uncoated portion 132a and a portion of the second electrode uncoated portion 134a are bent inward toward the winding axis (edge bending). As described above, this is also called a pre-compaction process.

When the electrode assembly 130 enters the winding roll structure 1000 according to the present disclosure, the electrode assembly 130 first passes between the pinch roller 1110 and the anvil roller 1130 constituting the edge bending unit 1100. Both side edges in the longitudinal direction of the electrode assembly 130, that is, the portion of the first electrode uncoated portion 132a of the first electrode plate 132 and the portion of the second electrode uncoated portion 134a of the second electrode plate 134, are pressed by the enlarged diameter portions 1113 of the pinch roller 1110 and folded or bent in one direction while the electrode assembly 130 enters the edge bending unit 1100 in the width direction thereof and passes through the gap provided between the pinch roller 1110 and the anvil roller 1130.

Specifically, when the electrode assembly 130 is disposed at a front end in an entry direction into the edge bending unit 1100, the portion of the first electrode uncoated portion 132a of the first electrode plate 132 protruding upward in the longitudinal direction, and the portion of the second electrode uncoated portion 134a of the second electrode plate 134 protruding downward in the longitudinal direction protrude further outward in the longitudinal direction of the anvil roller 1130 (see FIG. 6). In this state, in a process in which the edge bending unit 1100 is driven and the electrode assembly 130 is pulled between the pinch roller 1110 and the anvil roller 1130, the portions of the two uncoated portions 134a and 134b protruding outward in the longitudinal direction of the anvil roller 1130, that is, the portion of the first electrode uncoated portion 132a and the portion of the second electrode uncoated portion 134a come into contact with the enlarged diameter portions 1113 of the pinch roller 1110. Since the electrode assembly 130 is pressed by the enlarged diameter portion 1113 of the pinch roller 1110 while continuously entering the gap between the pinch roller 1110 and the anvil roller 1130, bending occurs in one direction (that is, a downward direction in FIG. 6). Accordingly, since the portion of the first electrode uncoated portion 132a and the portion of the second electrode uncoated portion 134a are respectively folded at a predetermined inclination or bent at a predetermined curvature with respect to the planes of the first electrode plate 132 and the second electrode plate 134, the portion of the first electrode uncoated portion 132a and the portion of the second electrode uncoated portion 134a are bent in one direction to form the bent edge portions 132b and 134b.

Meanwhile, as the bent edge portions 132b and 134b prepared through the above-described process are configurations in which the portion of the first electrode uncoated portion 132a and the portion of the second electrode uncoated portion 134a are bent, the first electrode uncoated portion 132a and the second electrode uncoated portion 134a may each be pressed by the inclined portion 1115 provided in each of the enlarged diameter portions 1113 of the pinch roller 1110 and bent in one direction at a predetermined angle. That is, as shown in FIG. 8A, the inclined portion 1115 inclined at a predetermined angle may be provided in the enlarged diameter portion 1113 of the pinch roller 1110, and when the electrode assembly 130 enters the edge bending unit 1100, both side edges are pressed and bent in one direction by the inclined portions 1115 while the electrode assembly 130 passes through the above-described gap. Alternatively, as shown in FIG. 8B, since the rounded portion R is processed in the connection portion between the enlarged diameter portion 1113 of the pinch roller 1110 and the roller main body 1111 at a predetermined curvature, when the electrode assembly 130 enters the edge bending unit 1100, the edges come into close contact with the rounded portions R while being pressed by the enlarged diameter portions 1113, and thus may be bent into curved surfaces with a predetermined curvature.

Though the above processes, after the entire electrode assembly 130 passes through the edge bending unit 1100, as shown in FIG. 5, the electrode assembly 130 is discharged from the bending unit 1100 in a state in which both side ends in the longitudinal direction are folded in one direction along the width direction. In this case, the one direction in which the edges are bent is a direction toward the winding axis of the electrode assembly 130.

Next, an operation is performed of allowing the electrode assembly 130 formed with the bent edge portions 132b and 134b to pass through the winding unit 1700 of the winding roll structure 1000 to wind the electrode assembly 130. The electrode assembly 130 is wound in a circular shape to form a jelly roll (J/R) while passing through the winding roll structure 1000. In this case, as shown in FIG. 5, a winding direction may be set so that the bent edge portions 132b and 134b folded in one direction of the electrode assembly 130 by the pre-compaction process may be oriented in a direction toward the winding axis.

Next, an operation of pressing the electrode assembly 130 in the longitudinal direction may be performed. As the electrode assembly 130 on which the pre-compaction process and the winding process are previously performed is pressed in the longitudinal direction thereof, the protruding base material takes a form which covers both longitudinal ends of the jelly roll.

After the pre-compaction process and the winding process are performed, as in a general secondary battery manufacturing process, the first current collector plate 121 and second current collector plate 122 (described above) may be respectively connected to the first electrode uncoated portion 132a and the second electrode uncoated portion 134a. Accordingly, the case 110 and the cap plate 160 are electrically connected to the electrode assembly 130.

As described above, the operations of bending both side edges in the longitudinal direction of the electrode assembly 130 in one direction to form the bent edge portions 132b and 134b (the pre-compaction process) and allowing the electrode assembly 130 formed with the bent edge portions 132b and 134b to pass through the winding unit 1700 of the winding roll structure 1000 to wind the electrode assembly 130 (the winding process) are sequentially and continuously performed while the electrode assembly 130 passes between the edge bending unit 1100 and the winding unit 1700 in the winding roll structure 1000 which performs the edge bending of the electrode assembly 130 according to the present disclosure. Accordingly, as the pre-compaction process and the winding process are performed in one device without preparing separate equipment/devices for performing the pre-compaction process, there is an advantage in that process efficiency may be maximized.

According to one embodiment of the present disclosure, when forming a cylindrical jelly roll by winding an electrode assembly, as a pre-compaction process of folding a base material protruding at both longitudinal sides of the electrode assembly in one direction is performed before winding, battery capacity can be increased by reducing a protruding length of the base material required for welding with a current collector plate.

The above-description are only embodiments for implementing the winding roll structure which implements the edge bending of the electrode assembly according to the present disclosure and the winding method using the same, and the present disclosure is not limited to the above-described embodiments.

## Claims

1. A winding roll structure (1000) configured to wind an electrode assembly (130) that includes a first electrode plate (132), a second electrode plate (134), and a separator (137) disposed between the first electrode plate (132) and the second electrode plate (134), the winding roll structure (1000) comprising:
an edge bending unit (1100) configured to bend side edges in a longitudinal direction of the electrode assembly (130) at opposite sides of the electrode assembly (130), the edge bending unit (1100) including a pinch roller (1110) and an anvil roller (1130) each extending in a longitudinal direction of the edge bending unit (1100) and arranged parallel to each other, the pinch roller (1110) including a roller main body (1111) and enlarged diameter portions (1113) provided at opposite ends of the roller main body (1111), with the enlarged diameter portions (1113) each having a larger diameter than a diameter of the roller main body (1111), and with the anvil roller (1130) being disposed adjacent to the pinch roller (1110) between the enlarged diameter portions (1113); and
a winding unit (1700) configured to wind the electrode assembly (130) that has passed through the edge bending unit (1100),
wherein the winding roll structure (1000) is configured such that both side edges of the electrode assembly (130) are bent in one direction while the electrode assembly (130) passes between the pinch roller (1110) and the anvil roller (1130).

2. The winding roll structure (1000) of claim 1, wherein the enlarged diameter portions (1113) of the pinch roller (1110) each include an inclined portion (1115) inclined relative to the roller main body (1111) at a predetermined angle and connected to the roller main body (1111); and
wherein the winding roll structure (1000) is configured such that the side edges of the electrode assembly (130) are pressed and bent in the one direction by the inclined portions (1115) when the electrode assembly (130) enters the edge bending unit (1100).

3. The winding roll structure (1000) of claim 1 or 2, wherein the edge being unit is configured to bend the side edges of the electrode assembly (130) in the same direction.

4. A winding method of winding an electrode assembly (130) including a first electrode plate (132), a second electrode plate (134), and a separator (137) disposed between the first electrode plate (132) and the second electrode plate (134),
the winding method comprising:
preparing the electrode assembly (130) by stacking the first electrode plate (132) and the second electrode plate (134) on each other with the separator (137) therebetween so that a first electrode uncoated portion (132a) of the first electrode plate (132) is exposed at a first end in a longitudinal direction and a second electrode uncoated portion (134a) of the second electrode plate (134) is exposed at a second end in the longitudinal direction;
passing the electrode assembly (130) through the edge bending unit (1100) of the winding roll structure (1000) according to one of claims 1 to 3, with side edges in the longitudinal direction of the electrode assembly (130) being bent to form bent side edge portions; and
passing the electrode assembly (130) with the bent side edge portions through the winding unit (1700) of the winding roll structure (1000) to wind the electrode assembly (130).

5. The winding method of claim 4, wherein the side edges portions are bent in a direction toward a winding axis of the electrode assembly (130).

6. The winding method of claim 4 or 5, wherein, in the forming the bent side edge portions, the side edges are pressed by the enlarged diameter portions (1113) of the pinch roller (1110) and bent while the electrode assembly (130) passes through the gap provided between the pinch roller (1110) and the anvil roller (1130).

7. The winding method of claim 6, wherein the both side edges are the first electrode uncoated portion (132a) and the second electrode uncoated portion (134a), and
wherein the first electrode uncoated portion (132a) and the second electrode uncoated portion (134a) are pressed by inclined portions (1115) provided in the enlarged diameter portions (1113) of the pinch roller (1110) and are bent at a predetermined angle.

8. The winding method of any of claims 4 to 7, wherein the side edges of the electrode assembly (130) are bent in the same direction,
wherein:
the electrode assembly (130) is prepared by stacking the first electrode plate (132) and the second electrode plate (134) on each other with the separator (137) therebetween so that a first electrode uncoated portion (132a) of the first electrode plate (132) is exposed at a first end in a longitudinal direction and a second electrode uncoated portion (134a) of the second electrode plate (134) is exposed at a second end in the longitudinal direction,
the first electrode uncoated portion (132a) and the second electrode uncoated portion (134a) are bent in one direction while the electrode assembly (130) passes through a gap provided between the pinch roller (1110) and the anvil roller (1130).
